# EUROPEAN PATENT APPLICATION

(11) **EP 4 651 620 A2**
(43) Date of publication of application: **19.11.2025**
(21) Application number: 25205731.0
(22) Date of filing: 03.04.2022
(51) Int. Cl.: H04W 84/12

(54) **SYSTEMS AND METHODS OF SERVICE PERIOD ANNOUNCEMENT FOR WIRELESS COMMUNICATION**

(30) Priority: 09.04.2021 US 202163173064 P; 09.03.2022 US 202217690574
(62) Divisional of application: 22718492.6
(71) Applicant: Meta Platforms Technologies, LLC, Menlo Park, CA 94025 (US)
(72) Inventor: GHOSH, Chittabrata, Menlo Park, 94025 (US); HU, Chunyu, Menlo Park, 94025 (US); HAIDER, Muhammad Kumail, Menlo Park, 94025 (US)
(74) Representative: Murgitroyd & Company

(57) **Abstract**

Disclosed herein are systems and methods directed to announcing a service period for restricted wake time scheduling. In one aspect, a first wireless communication device may configure at least one indicator indicating a status of each of a plurality of configured service periods (SPs) in a timeline, where the plurality of configured SPs support restricted target wake time (rTWT) scheduling. The first wireless communication device may send a message including the at least one indicator to a second wireless communication device.

## Description

### FIELD OF DISCLOSURE

The present disclosure is generally related to communication with certain latency requirements, including but not limited to reducing latency in communication for artificial reality and other applications.

### BACKGROUND

Artificial reality such as a virtual reality (VR), an augmented reality (AR), or a mixed reality (MR) provides immersive experience to a user. In one example, a user wearing a head wearable display (HWD) can turn the user's head, and an image of a virtual object corresponding to a location of the HWD and a gaze direction of the user can be displayed on the HWD to allow the user to feel as if the user is moving within a space of artificial reality (e.g., a VR space, an AR space, or a MR space).

In one implementation, an image of a virtual object is generated by a console communicatively coupled to the HWD. In one example, the HWD includes various sensors that detect a location and/or orientation of the HWD, and transmits the detected location and/or orientation of the HWD to the console through a wired connection or a wireless connection. The console can determine a user's view of the space of the artificial reality according to the detected location and/or orientation of the HWD, and generate image data indicating an image of the space of the artificial reality corresponding to the user's view. The console can transmit the image data to the HWD, by which the image of the space of the artificial reality corresponding to the user's view can be presented to the user. In one aspect, the process of detecting the location of the HWD and the gaze direction of the user wearing the HWD, and rendering the image to the user should be performed within a frame time (e.g., less than 11 ms). Any latency between a movement of the user wearing the HWD and an image displayed corresponding to the user movement can cause judder, which may result in motion sickness and can degrade the user experience.

### SUMMARY

Disclosed herein are systems and methods related to announcing a restricted target wake time service period schedule. Some embodiments are related to a method of configuring, by a first wireless communication device, at least one indicator indicating a status of each of a plurality of configured service periods (SPs) in a timeline, the plurality of configured SPs for restricted target wake time (rTWT) scheduling; and sending, by the first wireless communication device to a second wireless communication device, a message including the at least one indicator.

The at least one indicator may be for use by at least one of the first wireless communication device or the second wireless communication device to negotiate membership of a SP of the plurality of configured SPs, or to determine an operation with respect to the SP. The at least one indicator may include a field to indicate a total number of time slices, the total number of time slices comprising the timeline indicating an occurrence of a SP of the plurality of configured SPs. The at least one indicator may include a field to indicate a duration of each time slice in the timeline. The at least one indicator may include a field to indicate a start time of a first time slice of a plurality of time slices.

The at least one indicator may include another field to indicate whether the start time of the first time slice may be a relative time used to indicate an alignment of the start time of the first time slice of the plurality of time slices with respect to a time synchronization function (TSF). The alignment may be an offset based on a target beacon transmission time (TBTT) TSF. The first start time of the first time slice may also indicate a time synchronization function (TSF). The at least one indicator may include a field to indicate whether another field is present or has valid information. The at least one indicator may also include a field to indicate a persistence of the configured SPs. The status may indicate whether a time slice of a first SP of the configured SPs is occupied by a rTWT schedule. The status may indicate whether the first SP of the configured SPs is occupied by a member device, optionally a member wireless communication device. The time slice of the first SP of the configured SPs optionally being occupied by the member wireless communication device may cause the second wireless communication device to perform an operation at a start time of the first SP of the configured SPs.

The at least one indicator may include a field to indicate whether a time slice indicates a start time of a particular SP of the plurality of configured SPs. The at least one indicator may include a field to indicate whether a particular SP of the configured SPs is configured by a third wireless communication device in a basic service set different from that of the second wireless communication device. The at least one indicator may include a field to indicate whether a particular SP of the configured SPs is associated with a threshold amount of allocated resources or is unlikely to be available for a new membership request.

Other embodiments are related to a method of receiving, by a second wireless communication device from a first wireless communication device, a message including at least one indicator, wherein the at least one indicator indicates a status of each of a plurality of configured service periods (SPs) in a timeline, for restricted target wake time (rTWT) scheduling.

The at least one indicator may be for use by at least one of the first wireless communication device or the second wireless communication device to negotiate membership of a SP of the plurality of SPs, or to determine an operation with respect to the SP. The method may further comprise sending, by the second wireless communication device to the first wireless communication device, a membership request for a SP based on the status of the configured SPs. The method may further comprise ending transmission of traffic of the second wireless communication device before a start time of a particular SP responsive to the status of the particular SP being occupied by a member wireless communication device of a rTWT schedule.

Other embodiments are related to a wireless communication device including at least one processor configured to configure at least one indicator indicating a status of each of a plurality of configured service periods (SPs) in a timeline, for restricted target wake time (rTWT) scheduling, and a transmitter configured to send a message including the at least one indicator to a second wireless communication device

### BRIEF DESCRIPTION OF THE DRAWINGS

The accompanying drawings are not intended to be drawn to scale. Like reference numbers and designations in the various drawings indicate like elements. For purposes of clarity, not every component can be labeled in every drawing.
FIG. 1 is a diagram of a system environment including an artificial reality system, according to an example implementation of the present disclosure.
FIG. 2 is a diagram of a head wearable display, according to an example implementation of the present disclosure.
FIG. 3 is a block diagram of a computing environment, according to an example implementation of the present disclosure.
FIG. 4 is a timing diagram showing a wake-up/sleep schedule of a computing device utilizing Target Wake Time, according to an example implementation of the present disclosure.
FIG. 5 is a format of a Restricted Target Wake Time Service Period Announcement Element, according to an example implementation of the present disclosure.
FIG. 6 shows an example Service Period Bitmap Control format, according to an example implementation of the present disclosure.
FIG. 7 illustrates an example of the Service Period Status Bitmap field indicating whether a time slice is occupied by a Restricted Target Wake Time Service Period, according to an example implementation of the present disclosure.
FIG. 8 shows an example Service Period Slice Information field format, according to an example implementation of the present disclosure.
FIG. 9 is a format of a Request Type field in a Broadcast Target Wake Time Parameter Set field, according to an example implementation of the present disclosure.
FIG. 10 illustrates an interaction/flow diagram showing a process of announcing a restricted Target Wake Time Service Period schedule, according to an example implementation of the present disclosure.

### DETAILED DESCRIPTION

Before turning to the figures, which illustrate certain embodiments in detail, it should be understood that the present disclosure is not limited to the details or methodology set forth in the description or illustrated in the figures. It should also be understood that the terminology used herein is for the purpose of description only and should not be regarded as limiting.

Streams of traffic across a network may be characterized by different types of traffic. For instance, an application may be characterized by latency sensitive traffic (e.g., video/voice (VI/VO), real time interactive applications, and the like) or regular traffic (e.g., best effort/background applications (BE/BK)). Latency sensitive traffic may be identifiable by its characteristic of periodic bursts of traffic. For instance, video display traffic may be driven by the refresh rate of for instance 60Hz, 72Hz, 90Hz, and/or 120Hz. An application and/or device may have combinations of traffic types (e.g., latency sensitive traffic and non-latency sensitive traffic).

Latency sensitive traffic that is not prioritized (or protected) may degrade a user experience. For example, in an AR context, latency between a movement of a user wearing an AR device and an image corresponding to the user movement and displayed to the user using the AR device may cause judder, resulting in motion sickness.

A device (e.g., AP, soft AP, STA, console) may configure latency sensitive time slots in particular service periods (SPs) such that the latency sensitive traffic can be prioritized over regular traffic. A device (e.g., AP, soft AP) may control (or manage, schedule) the traffic streams and/or station (STAs) access to allocated links/channels. For example, devices may communicate using allocated channel transmission bandwidth such that only admitted (e.g., registered or assigned) devices have access to the channel. The devices (e.g., AP and/or STA) may agree on a distribution of traffic streams during an SP. Traffic identified as latency sensitive (e.g., having a defined latency requirement, for instance to be within a specific latency range or below a defined latency threshold) may be communicated during a particular SP, for example.

Disclosed herein are systems and methods for announcing/advertising a schedule of configured SPs for restricted target wake time scheduling, which can facilitate or support latency sensitive traffic, arising from applications such as remote rendering of an artificial reality space (e.g., an AR space, a VR space, or a MR space), or other wireless communication applications.

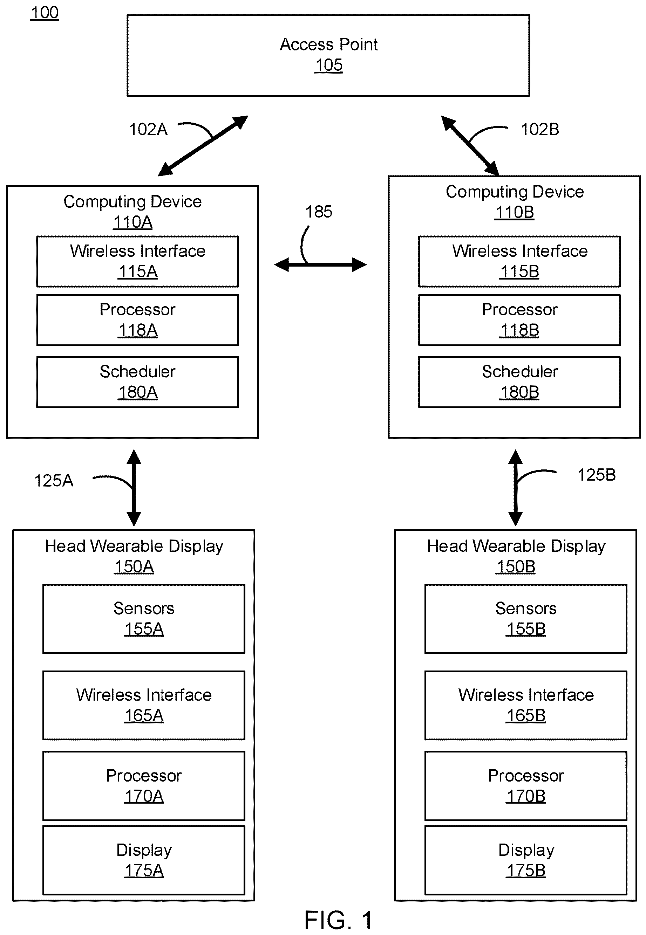

FIG. 1 is a block diagram of an example artificial reality system environment 100. In some embodiments, the artificial reality system environment 100 includes an access point (AP) 105, one or more HWDs 150 (e.g., HWD 150A, 150B), and one or more computing devices 110 (computing devices 110A, 110B) providing data for artificial reality to the one or more HWDs 150. The access point 105 may be a router or any network device allowing one or more computing devices 110 and/or one or more HWDs 150 to access a network (e.g., the Internet). The access point 105 may be replaced by any communication device (cell site). A computing device 110 may be a computing device or a mobile device that can retrieve content from the access point 105, and can provide image data of artificial reality to a corresponding HWD 150. Each HWD 150 may present the image of the artificial reality to a user according to the image data. In some embodiments, the artificial reality system environment 100 includes more, fewer, or different components than shown in FIG. 1. In some embodiments, the computing devices 110A, 110B communicate with the access point 105 through wireless links 102A, 102B (e.g., interlinks), respectively. In some embodiments, the computing device 110A communicates with the HWD 150A through a wireless link 125A (e.g., intralink), and the computing device 110B communicates with the HWD 150B through a wireless link 125B (e.g., intralink). In some embodiments, functionality of one or more components of the artificial reality system environment 100 can be distributed among the components in a different manner than is described here. For example, some of the functionality of the computing device 110 may be performed by the HWD 150. Additionally or alternatively, some of the functionality of the HWD 150 may be performed by the computing device 110.

In some embodiments, the HWD 150 is an electronic component that can be worn by a user and can present or provide an artificial reality experience to the user. The HWD 150 may be referred to as, include, or be part of a head mounted display (HMD), head mounted device (HMD), head wearable device (HWD), head worn display (HWD) or head worn device (HWD). The HWD 150 may render one or more images, video, audio, or some combination thereof to provide the artificial reality experience to the user. In some embodiments, audio is presented via an external device (e.g., speakers and/or headphones) that receives audio information from the HWD 150, the computing device 110, or both, and presents audio based on the audio information. In some embodiments, the HWD 150 includes sensors 155, a wireless interface 165, a processor 170, and a display 175. These components may operate together to detect a location of the HWD 150 and a gaze direction of the user wearing the HWD 150, and render an image of a view within the artificial reality corresponding to the detected location and/or orientation of the HWD 150. In other embodiments, the HWD 150 includes more, fewer, or different components than shown in FIG. 1.

In some embodiments, the sensors 155 include electronic components or a combination of electronic components and software components that detects a location and an orientation of the HWD 150. Examples of the sensors 155 can include: one or more imaging sensors, one or more accelerometers, one or more gyroscopes, one or more magnetometers, or another suitable type of sensor that detects motion and/or location. For example, one or more accelerometers can measure translational movement (e.g., forward/back, up/down, left/right) and one or more gyroscopes can measure rotational movement (e.g., pitch, yaw, roll). In some embodiments, the sensors 155 detect the translational movement and the rotational movement, and determine an orientation and location of the HWD 150. In one aspect, the sensors 155 can detect the translational movement and the rotational movement with respect to a previous orientation and location of the HWD 150, and determine a new orientation and/or location of the HWD 150 by accumulating or integrating the detected translational movement and/or the rotational movement. Assuming for an example that the HWD 150 is oriented in a direction 25 degrees from a reference direction, in response to detecting that the HWD 150 has rotated 20 degrees, the sensors 155 may determine that the HWD 150 now faces or is oriented in a direction 45 degrees from the reference direction. Assuming for another example that the HWD 150 was located two feet away from a reference point in a first direction, in response to detecting that the HWD 150 has moved three feet in a second direction, the sensors 155 may determine that the HWD 150 is now located at a vector multiplication of the two feet in the first direction and the three feet in the second direction.

In some embodiments, the wireless interface 165 includes an electronic component or a combination of an electronic component and a software component that communicates with the computing device 110. In some embodiments, the wireless interface 165 includes or is embodied as a transceiver for transmitting and receiving data through a wireless medium. The wireless interface 165 may communicate with a wireless interface 115 of a corresponding computing device 110 through a wireless link 125 (e.g., intralink). The wireless interface 165 may also communicate with the access point 105 through a wireless link (e.g., interlink). Examples of the wireless link 125 include a near field communication link, Wi-Fi direct, Bluetooth, or any wireless communication link. Through the wireless link 125, the wireless interface 165 may transmit to the computing device 110 data indicating the determined location and/or orientation of the HWD 150, the determined gaze direction of the user, and/or hand tracking measurement. Moreover, through the wireless link 125, the wireless interface 165 may receive from the computing device 110 image data indicating or corresponding to an image to be rendered.

In some embodiments, the processor 170 includes an electronic component or a combination of an electronic component and a software component that generates one or more images for display, for example, according to a change in view of the space of the artificial reality. In some embodiments, the processor 170 is implemented as one or more graphical processing units (GPUs), one or more central processing unit (CPUs), or a combination of them that can execute instructions to perform various functions described herein. The processor 170 may receive, through the wireless interface 165, image data describing an image of artificial reality to be rendered, and render the image through the display 175. In some embodiments, the image data from the computing device 110 may be encoded, and the processor 170 may decode the image data to render the image. In some embodiments, the processor 170 receives, from the computing device 110 through the wireless interface 165, object information indicating virtual objects in the artificial reality space and depth information indicating depth (or distances from the HWD 150) of the virtual objects. In one aspect, according to the image of the artificial reality, object information, depth information from the computing device 110, and/or updated sensor measurements from the sensors 155, the processor 170 may perform shading, reprojection, and/or blending to update the image of the artificial reality to correspond to the updated location and/or orientation of the HWD 150.

In some embodiments, the display 175 is an electronic component that displays an image. The display 175 may, for example, be a liquid crystal display or an organic light emitting diode display. The display 175 may be a transparent display that allows the user to see through. In some embodiments, when the HWD 150 is worn by a user, the display 175 is located proximate (e.g., less than 3 inches) to the user's eyes. In one aspect, the display 175 emits or projects light towards the user's eyes according to image generated by the processor 170. The HWD 150 may include a lens that allows the user to see the display 175 in a close proximity.

In some embodiments, the processor 170 performs compensation to compensate for any distortions or aberrations. In one aspect, the lens introduces optical aberrations such as a chromatic aberration, a pin-cushion distortion, barrel distortion, etc. The processor 170 may determine a compensation (e.g., predistortion) to apply to the image to be rendered to compensate for the distortions caused by the lens, and apply the determined compensation to the image from the processor 170. The processor 170 may provide the predistorted image to the display 175.

In some embodiments, the computing device 110 is an electronic component or a combination of an electronic component and a software component that provides content to be rendered to the HWD 150. The computing device 110 may be embodied as a mobile device (e.g., smart phone, tablet PC, laptop, etc.). The computing device 110 may operate as a soft access point. In one aspect, the computing device 110 includes a wireless interface 115 and a processor 118. These components may operate together to determine a view (e.g., a field of view of the user) of the artificial reality corresponding to the location of the HWD 150 and the gaze direction of the user of the HWD 150, and can generate image data indicating an image of the artificial reality corresponding to the determined view. The computing device 110 may also communicate with the access point 105, and may obtain AR/VR content from the access point 105, for example, through the wireless link 102 (e.g., interlink). The computing device 110 may receive sensor measurement indicating location and the gaze direction of the user of the HWD 150 and provide the image data to the HWD 150 for presentation of the artificial reality, for example, through the wireless link 125 (e.g., intralink). In other embodiments, the computing device 110 includes more, fewer, or different components than shown in FIG. 1.

In some embodiments, the wireless interface 115 is an electronic component or a combination of an electronic component and a software component that communicates with the HWD 150, the access point 105, other computing device 110, or any combination of them. In some embodiments, the wireless interface 115 includes or is embodied as a transceiver for transmitting and receiving data through a wireless medium. The wireless interface 115 may be a counterpart component to the wireless interface 165 to communicate with the HWD 150 through a wireless link 125 (e.g., intralink). The wireless interface 115 may also include a component to communicate with the access point 105 through a wireless link 102 (e.g., interlink). Examples of wireless link 102 include a cellular communication link, a near field communication link, Wi-Fi, Bluetooth, 60 GHz wireless link, or any wireless communication link. The wireless interface 115 may also include a component to communicate with a different computing device 110 through a wireless link 185. Examples of the wireless link 185 include a near field communication link, Wi-Fi direct, Bluetooth, or any wireless communication link. Through the wireless link 102 (e.g., interlink), the wireless interface 115 may obtain AR/VR content, or other content from the access point 105. Through the wireless link 125 (e.g., intralink), the wireless interface 115 may receive from the HWD 150 data indicating the determined location and/or orientation of the HWD 150, the determined gaze direction of the user, and/or the hand tracking measurement. Moreover, through the wireless link 125 (e.g., intralink), the wireless interface 115 may transmit to the HWD 150 image data describing an image to be rendered. Through the wireless link 185, the wireless interface 115 may receive or transmit information indicating the wireless link 125 (e.g., channel, timing) between the computing device 110 and the HWD 150. According to the information indicating the wireless link 125, computing devices 110 may coordinate or schedule operations to avoid interference or collisions.

The processor 118 can include or correspond to a component that generates content to be rendered according to the location and/or orientation of the HWD 150. In some embodiments, the processor 118 includes or is embodied as one or more central processing units, graphics processing units, image processors, or any processors for generating images of the artificial reality. In some embodiments, the processor 118 may incorporate the gaze direction of the user of the HWD 150 and a user interaction in the artificial reality to generate the content to be rendered. In one aspect, the processor 118 determines a view of the artificial reality according to the location and/or orientation of the HWD 150. For example, the processor 118 maps the location of the HWD 150 in a physical space to a location within an artificial reality space, and determines a view of the artificial reality space along a direction corresponding to the mapped orientation from the mapped location in the artificial reality space. The processor 118 may generate image data describing an image of the determined view of the artificial reality space, and transmit the image data to the HWD 150 through the wireless interface 115. The processor 118 may encode the image data describing the image, and can transmit the encoded data to the HWD 150. In some embodiments, the processor 118 generates and provides the image data to the HWD 150 periodically (e.g., every 11 ms or 16 ms).

In some embodiments, the processors 118 may configure or cause the wireless interfaces 115to toggle, transition, cycle or switch between a sleep mode and a wake up mode. In the wake up mode, the processor 118 may enable the wireless interface 115 such that the wireless interfaces 115may exchange data. In the sleep mode, the processor 118 may disable the wireless interface 115 (e.g., may implement low power or reduced operation) such that the wireless interfaces 115 may not consume power, or may reduce power consumption. The processors 118 may schedule the wireless interfaces 115 to switch between the sleep mode and the wake up mode periodically every frame time (e.g., 11 ms or 16 ms). For example, the wireless interfaces 115 may operate in the wake up mode for 2 ms of the frame time, and the wireless interfaces 115 may operate in the sleep mode for the remainder (e.g., 9 ms) of the frame time. By disabling the wireless interfaces 115 in the sleep mode, power consumption of the computing device 110 and the HWD 150 can be reduced or minimized.

In some embodiments, the processors 118 may configure or cause the wireless interfaces 115to resume communication based on stored information indicating communication between the computing device 110 and the HWD 150. In the wake up mode, the processors 118 may generate and store information (e.g., channel, timing) of the communication between the computing device 110 and the HWD 150. The processors 118 may schedule the wireless interfaces 115 to enter a subsequent wake up mode according to timing of the previous communication indicated by the stored information. For example, the wireless interfaces 115 may predict/determine when to enter the subsequent wake up mode, according to timing of the previous wake up mode, and can schedule to enter the subsequent wake up mode at the predicted time. After generating and storing the information and scheduling the subsequent wake up mode, the processors 118 may configure or cause the wireless interfaces 115to enter the sleep mode. When entering the wake up mode, the processors 118 may cause or configure the wireless interfaces 115to resume communication via the channel or frequency band of the previous communication indicated by the stored information. Accordingly, the wireless interfaces 115entering the wake up mode from the sleep mode may resume communication, while bypassing a scan procedure to search for available channels and/or performing handshake or authentication. Bypassing the scan procedure allows extension of a duration of the wireless interfaces 115operating in the sleep mode, such that the computing device 110 and the HWD 150 can reduce power consumption.

In some embodiments, the computing devices 110A, 110B may coordinate operations to reduce collisions or interferences. In one approach, the computing device 110A may transmit a beacon frame periodically to announce/advertise a presence of a wireless link 125A between the computing device 110A and the HWD 150A and can coordinate the communication between the computing device 110A and the HWD 150A. The computing device 110B may monitor for or receive the beacon frame from the computing device 110A, and can schedule communication with the HWD 150B (e.g., using information in the beacon frame, such as an offset value) to avoid collision or interference with communication between the computing device 110A and the HWD 150A. For example, the computing device 110B may schedule the computing device 110B and the HWD 150B to enter a wake up mode, when the computing device 110A and the HWD 150A operate in the sleep mode. For example, the computing device 110B may schedule the computing device 110B and the HWD 150B to enter a sleep up mode, when the computing device 110A and the HWD 150A operate in the wake up mode. Accordingly, multiple computing devices 110 and HWDs 150 in proximity (e.g., within 20 ft) may coexist and operate with reduced interference.

In some embodiments, a scheduler 180 (e.g., scheduler 180A of the computing device 110A and/or scheduler 180B of the computing device 110B) may be used to facilitate communication between the HWD 150 (e.g., HWD 150A and/or HWD 150B), the computing device 110 (e.g., computing device 110A and/or computing device 110B), and/or the AP 105. For instance, the computing device 110A may operate as a soft AP to the HWD 150A, and may send a TWT-related announcement to the HWD 150A. In another example, the AP 105 may send a TWT-related announcement to the computing device 110A. For instance, the AP 105 may configure a SP in a schedule by allocating time slots, carriers, frequency bands, etc., to particular links/frequency channels. The schedule may be defined by SPs with characteristics including SP interval, SP duration, SP start time, SP end time, schedule/SP frequency or periodicity, etc.

The scheduler 180 may listen to announcements from the AP 105 and can obtain/receive/determine a configured schedule from one of the announcements. The scheduler 180 may be used to schedule (e.g., identify, or classify) traffic for configured SPs based on access categories, TIDs, source/destination of traffic, the direction of traffic (e.g., UL/DL), and/or a predicted traffic pattern (e.g., the expected traffic originating from the device and/or application, traffic expected by the device and/or application, and/or expected peer-to-peer traffic). The scheduler 180 (e.g., of the computing device 110) may communicate with the AP 105 to establish membership of the computing device 110 in the schedule, suitable for traffic to be communicated by the computing device 110. For example, the AP 105 and the scheduler 180 may negotiate (e.g., perform a handshake process). The scheduler 180 may provide its own traffic information and/or preferred data rate, bandwidth characteristics, QoS characteristics, and the like during a setup procedure. The AP 105 (which can alternatively be a peer computing device 110 in peer-to-peer (P2P) configuration) may accept/reject/modify the request (e.g., perform admission control) and may perform resource allocation to update the SP schedule. The computing device 110 and AP 105 may agree on a distribution of traffic and/or SP allocation of link 125 (e.g., link 125A and/or 125B), link 185, and/or link 102 (e.g., link 102A and/or 102B).

The schedulers 180 of the computing devices 110 may for instance schedule communication between the computing device(s) 110 and the AP 105 such that the communication between the computing device(s) 110 and AP 105 is protected/managed. In a P2P scenario, a scheduler 180 of the computing device 110 may for instance schedule communication between the computing device 110 and the HWD 150 with the AP 105 such that the communication between the computing device 110 and the HWD 150 is protected/managed. For instance, the computing device(s) 110 may initiate protected P2P communication with the HWD(s) 150 by indicating, to the AP 105, that the computing device(s) 110 wish to schedule P2P communication in a particular SP of a schedule. The scheduler 180 of the computing device(s) may schedule (or negotiate for) the requested SP(s) with the AP 105.

When the AP 105 and the scheduler 118 are negotiating, the AP 105 may be considered a scheduling AP (e.g., AP) and the computing devices 110 may be considered a scheduled STA (e.g., STA). In some embodiments, the HWD 150 may request to send P2P traffic to the computing device 110. Accordingly, the HWD 150 may be considered the requesting STA (e.g., the STA that requests the membership of a schedule), and the computing device 110 may be considered a responding STA (e.g., the STA that responds to the request). In other embodiments, the computing device 110 may request to send P2P traffic to the HWD 150 such that the computing device 110 is considered the requesting STA and the HWD 150 is the responding STA.

The communication link 125 between the computing devices 110 and the HWDs 150 may be a P2P link (e.g., a link used for transmission between two non-AP devices). The communication link 102 between the computing devices 110 and the AP 105 may be any channel or other type of link. In some configurations, the HWD 150 may move/become out of range from the access point 105.

Upon agreeing to the traffic distribution/schedule in SPs using the scheduler 180 and AP 105, the computing device 110 and/or HWD 150 may communicate traffic according to the agreed schedule. In some implementations, traffic identified as latency sensitive may be communicated during the scheduled SPs.

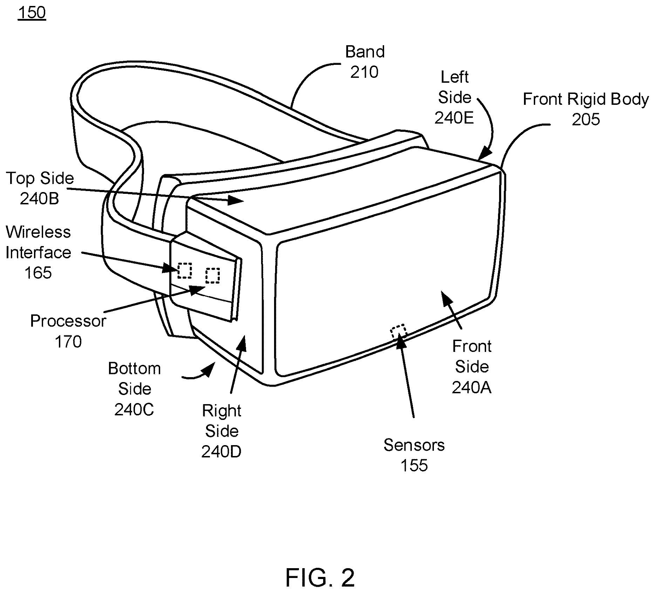

FIG. 2 is a diagram of a HWD 150, in accordance with an example embodiment. In some embodiments, the HWD 150 includes a front rigid body 205, a left side 240E, a front side 240A, a right side 240D, a bottom side 240C, a top side 240B, and a band 210. The front rigid body 205 includes the electronic display 175 (not shown in FIG. 2), the lens 180 (not shown in FIG. 2), the sensors 155, the eye trackers 160A, 160B, (not shown) the communication interface (wireless interface) 165, and the processor (image renderer) 170. In the embodiment shown by FIG. 2, the communication interface 165, the image renderer 170, and the sensors 155 are located within the front rigid body 205, and may not visible to the user. In other embodiments, the HWD 150 has a different configuration than shown in FIG. 2. For example, the communication interface 165, the image renderer 170, the eye trackers 160A, 160B, and/or the sensors 155 may be in different locations than shown in FIG. 2.

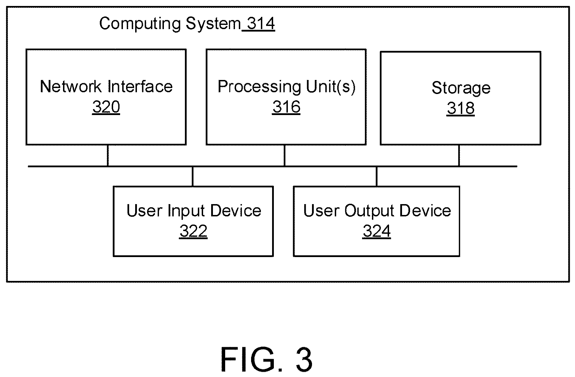

Various operations described herein can be implemented on computer systems. FIG. 3 shows a block diagram of a representative computing system 314 usable to implement the present disclosure, in accordance with an example embodiment. In some embodiments, the console 110, the HWD 150 or both of FIG. 1 are implemented by the computing system 314. Computing system 314 can be implemented, for example, as a consumer device such as a smartphone, other mobile phone, tablet computer, wearable computing device (e.g., smart watch, eyeglasses, head wearable display), desktop computer, laptop computer, or implemented with distributed computing devices. The computing system 314 can be implemented to provide VR, AR, MR experience. In some embodiments, the computing system 314 can include conventional computer components such as processors 316, storage device 318, network interface 320, user input device 322, and user output device 324.

Network interface 320 can provide a connection to a wide area network (e.g., the Internet) to which WAN interface of a remote server system is also connected. Network interface 320 can include a wired interface (e.g., Ethernet) and/or a wireless interface implementing various RF data communication standards such as Wi-Fi, Bluetooth, or cellular data network standards (e.g., 3G, 4G, 5G, 60 GHz, LTE, etc.).

User input device 322 can include any device (or devices) via which a user can provide signals to computing system 314; computing system 314 can interpret the signals as indicative of particular user requests for information. User input device 322 can include any or all of a keyboard, touch pad, touch screen, mouse or other pointing device, scroll wheel, click wheel, dial, button, switch, keypad, microphone, sensors (e.g., a motion sensor, an eye tracking sensor, etc.), and so on.

User output device 324 can include any device via which computing system 314 can provide information to a user. For example, user output device 324 can include a display to display images generated by or delivered to computing system 314. The display can incorporate various image generation technologies, e.g., a liquid crystal display (LCD), light-emitting diode (LED) including organic light-emitting diodes (OLED), projection system, cathode ray tube (CRT), or the like, together with supporting electronics (e.g., digital-to-analog or analog-to-digital converters, signal processors, or the like). A device such as a touchscreen that function as both input and output device can be used. Output devices 324 can be provided in addition to or instead of a display. Examples include indicator lights, speakers, tactile "display" devices, printers, and so on.

Some implementations include electronic components, such as microprocessors, storage and memory that store computer program instructions in a computer readable storage medium (e.g., non-transitory computer readable medium). Many of the features described in this specification can be implemented as processes that are specified as a set of program instructions encoded on a computer readable storage medium. When these program instructions are executed by one or more processors, they cause the processors to perform various operation indicated in the program instructions. Examples of program instructions or computer code include machine code, such as is produced by a compiler, and files including higher-level code that are executed by a computer, an electronic component, or a microprocessor using an interpreter. Through suitable programming, processor 316 can provide various functionality for computing system 314, including any of the functionality described herein as being performed by a server or client, or other functionality associated with message management services.

It will be appreciated that computing system 314 is illustrative and that variations and modifications are possible. Computer systems used in connection with the present disclosure can have other capabilities not specifically described here. Further, while computing system 314 is described with reference to particular blocks, it is to be understood that these blocks are defined for convenience of description and are not intended to imply a particular physical arrangement of component parts. For instance, different blocks can be located in the same facility, in the same server rack, or on the same motherboard. Further, the blocks need not correspond to physically distinct components. Blocks can be configured to perform various operations, e.g., by programming a processor or providing appropriate control circuitry, and various blocks might or might not be reconfigurable depending on how the initial configuration is obtained. Implementations of the present disclosure can be realized in a variety of apparatus including electronic devices implemented using any combination of circuitry and software.

In some embodiments, a Target Wake Time (TWT) is a time agreed/negotiated upon by computing device(s) 110, access point(s) 105 and/or HWD(s) 150, or specified/configured by one of the devices (e.g., by the access point 105). During the wake time, the computing device 110 may be in an awake/active state (e.g., its wireless communication module/interface is in a powered-up, ready or wake state) and is able to transmit (e.g., using various contention based procedures, non-contention based procedures, and the like) and/or receive. When the computing device 110 is inactive or not awake (e.g., its wireless communication module/interface is in a powered-down, low power or sleep state), the computing device 110 may enter a low power mode or other sleep mode. The computing device 110 may exist in a sleep state until a time instance/window as specified by the TWT. The computing device 110 can wake up periodically (e.g., at a fixed, configured time interval/period/cycle) based on the TWT (e.g., based on a TWT schedule). The TWT reduces energy consumption of the computing device 110 by limiting the awake time and associated power consumption of the computing device 110.

A TWT may be characterized by a periodic, fixed, wake-sleep schedule. TWT may be a mechanism where a set of SPs are defined and shared between devices to reduce medium contention and improve the power efficiency of the devices. For example, the computing device 110 can wake up periodically (e.g., at a fixed, configured time interval/period/cycle) based on the TWT.

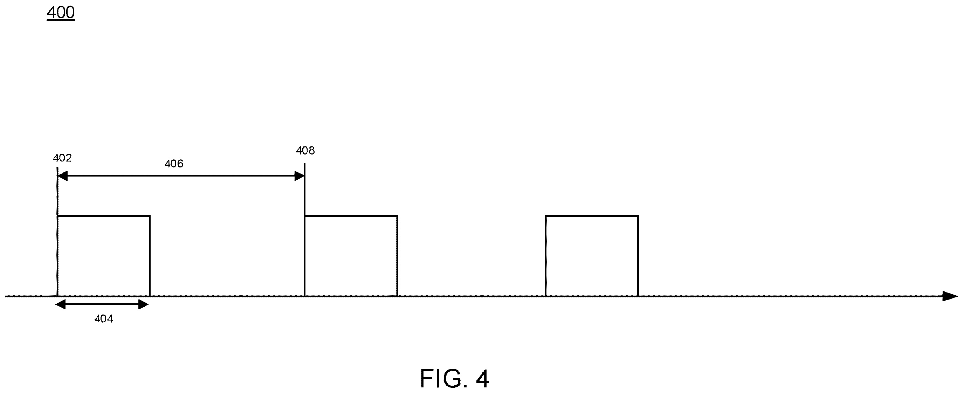

FIG. 4 is a timing diagram 400 showing a wake-up/sleep schedule of a computing device utilizing TWT, according to an example implementation of the present disclosure. The TWT start time is indicated by the computing device 110 (e.g., a portion of its relevant modules/circuitry) waking up at 402. The computing device 110 may wake up for a duration 404 defined by a SP. After the SP duration 404, the computing device 110 may enter a sleep state until the next TWT start time at 408. The interval of time between TWT start time 402 and TWT start time 408 may be considered the SP interval 406.

A TWT schedule may be communicated and/or negotiated using broadcast TWT (bTWT) and/or individual TWT (iTWT) signaling. A device (such as AP 105) may schedule TWT SPs with other devices (e.g., computing devices 110 and/or HWDs 150) and may share schedule information in beacon frames and/or probe response frames. STAs may request membership in the shared schedule (e.g., request to be assigned to part (e.g., a service period) of the shared schedule) based on the shared schedule characteristics and/or negotiate membership in the SP based on traffic considerations (e.g., latency sensitive traffic streams). Example frames that may be transmitted during a broadcast TWT SP by a TWT scheduling AP or by a TWT scheduled STA may include PS-Poll and QoS Null frames, frame exchanges for delivery of QoS data frames of TIDs indicated by the rTWT TID Bitmap subfield (as discussed herein), bandwidth query report frames (BQRs), buffer status report (BSR) frames (the TIDs in the BSR may include the TIDs indicated by the rTWT TID Bitmap subfield, as described herein), frames that may be sent as part of a sounding feedback exchange, management frames (e.g., action or action No acknowledge (ACK) frames), control response frames, transmitted beacons (e.g., individual and/or broadcast), probe response frames, association (or re-association) frames, fast initial link setup (FILS) discovery, and/or other frames. Different rules may be defined for configuring different frames.

An AP (e.g., AP 105 and/or other device operating as a soft AP/hotspot) may enhance medium access protection and resource reservation by supporting restricted TWT (rTWT). The rTWT SPs may be used to deliver latency sensitive traffic and/or any additional frame that supports latency sensitive traffic. Broadcast TWT signaling may be extended for use in scheduling/negotiation/communicating rTWT SPs.

STAs may achieve more predictable latency and reduce worst-case latency for latency sensitive traffic using rTWT. In some embodiments, some STAs supporting rTWT operation may end their transmission opportunity (TXOP) before the start of a rTWT SP. The TXOP is a STA's opportunity to transmit on a medium. Generally, STAs may wait their turn to transmit on the medium. STAs ending their TXOP before the start of a rTWT SP increase the likelihood that the wireless medium is idle/clear at the start of a SP. In such a manner, latency sensitive traffic that may be transmitted during the rTWT and may be delivered with priority by reducing jitter resulting from a varying SP start time. The SP start time may vary as a result of unfinished transmissions. The STA that is a member of the SP may transmit their traffic (latency sensitive traffic) during the SP without interference from ongoing transmissions and/or new transmissions.

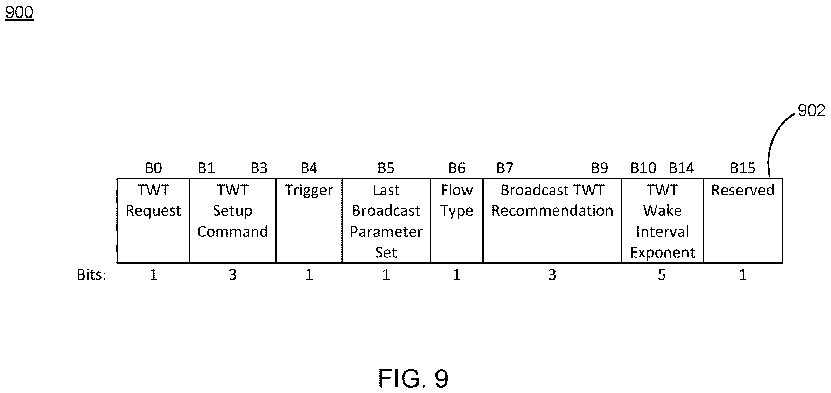

An AP may advertise/announce/specify/describe one or more restricted SPs (or rTWT SP occupancy information), for example in an information element (IE) which may be referred to as a rTWT SP Announcement element, or in any other frame structure (e.g., of various fields). An AP may set the fields in the rTWT SP Announcement Element. Additionally or alternatively, the AP may include the rTWT SP Announcement element fields in different embodiments in frames that carry existing elements (e.g., TWT element). For example, in the control subfield of a TWT element, the Negotiation Type field may be set to '2' (e.g., configured to be transmitted using group address), and/or the TWT Setup Command subfield (e.g., in the Request Type Field in a Broadcast TWT Parameter Set field in FIG. 9), may be set to Accept TWT, Alternate TWT, or Reject TWT.

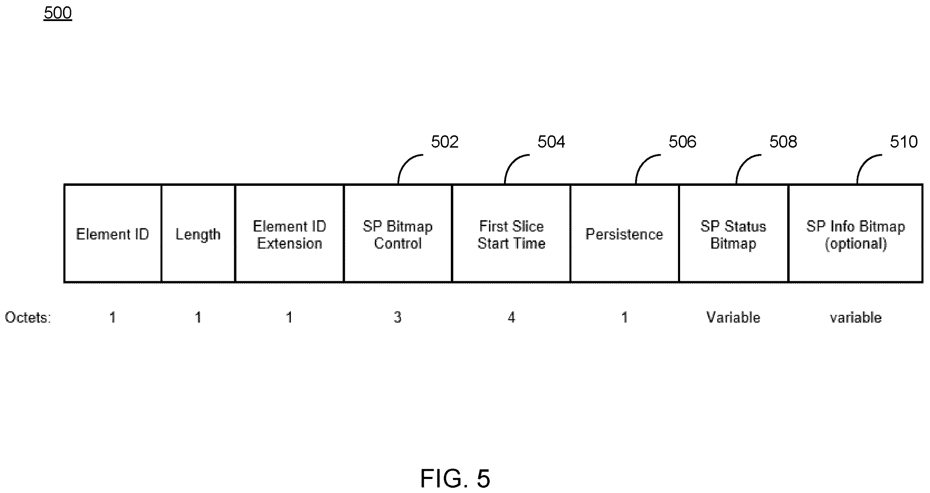

FIG. 5 shows an example format of a Restricted TWT SP Announcement element 500, according to an example implementation of the present disclosure. It is contemplated that the locations (e.g., field, subfield, bitmap, octet and/or bit locations) and/or order of these in an information element (IE) and/or rTWT SP Announcement element 500 may be altered and/or re-ordered from those illustrated herein.

The rTWT SP Announcement element 500 may indicate rTWT SP schedule information. This schedule information may encompass a single or a plurality of schedules, and each schedule in turn may be a repeated/periodic sequence of SPs in a timeline. Configured SPs/scheduled SPs may be SPs indicated in the rTWT SP Announcement element in the timeline.

A schedule may be considered active if a STA has established membership in the schedule. In some cases, a schedule may not be active if no membership is established yet (or one or more existing memberships have been suspended). An AP (or other device such as a prospective peer STA) may advertise a schedule without any members, to invite membership. If a schedule is not active, then STAs may determine, based on the announcement, not to end their TXOP at the start boundary of the rTWT SP.

The rTWT SP Announcement element 500 can indicate/specify/describe configured SPs in a timeline in the time domain. A device receiving the rTWT SP Announcement element 500 (or other indication/fields/bits of the timeline of the configured SPs) can determine time occurrence of SPs on the channel/link/medium based on the timeline. That is, a STA may determine an occurrence of SPs on the channel/link/medium by reconstructing the scheduled/configured SPs (including the SP duration, SP start time, SP end time, SP frequency, SP interval, etc.) in the timeline. The STA may determine to request membership in (e.g., to be assigned to) one or more SPs based on the configured SPs in the timeline. The AP may communicate an rTWT SP Announcement element 500 to express/identify or provide notice of, using the timeline, restricted SPs that have at least one rTWT membership that is already setup (e.g., at least one member STA). By indicating restricted SPs that have at least on rTWT agreement, the STA receiving the rTWT SP Announcement may perform certain rTWT transmission functions/operation (e.g., adhere to transmission rules such as ending TXOP before an active restricted SP).

The AP may communicate one or more fields of the rTWT SP Announcement element by appending fields in the rTWT SP Announcement element 500 to other elements, repurposing/modifying bits in other elements, and the like. It should be appreciated that the subfields/fields described in the rTWT SP Announcement element 500 may be located in any other field/subfield. For example, bits in other fields/subfields (e.g., not the rTWT SP Announcement element 500) may be repurposed/modified/added to indicate the fields described herein.

In some embodiments, an AP may advertise/announce/specify/describe one or more TXOPs in a TXOP Announcement element using fields and subfields similar in structure/function to those in the rTWT SP Announcement element 500. That is, the purpose for the announcement using rTWT SP Announcement element 500 (or an equivalent IE/fields/bits) may be to announce rTWT SPs (as discussed) and/or or to announce TXOPs. The rTWT SP Announcement element may be applied as a sharing mechanism for TXOPs, for instance. The TXOPs announced may be TXOPs in an rTWT schedule or TXOPs not in an rTWT schedule. Moreover, the AP may communicate one or more fields of the rTWT TXOP Announcement element by appending fields in the rTWT TXOP Announcement element to other elements, repurposing/modifying bits in other elements, and the like. The rTWT TXOP Announcement element may be carried by one or multiple broadcast frames and/or individual management frames.

The AP may communicate the rTWT SP Announcement element 500 using bTWT signaling and/or iTWT signaling. For example, a reserved bit in the Request Type field in a Broadcast TWT Parameter Set field may be established/configured/modified/ and/or repurposed to indicate rTWT and/or an rTWT schedule. Additionally or alternatively, a broadcast TWT element with the Broadcast TWT Recommendation field set to 4 may indicate rTWT and/or an rTWT schedule. Additionally or alternatively, certain bits may be appended/repurposed/configured to indicate rTWT and/or an rTWT schedule. FIG. 9 is a format of a Request Type field 900 in a Broadcast TWT Parameter Set field, according to an example implementation of the present disclosure. It is contemplated that the locations (e.g., field, subfield, bitmap, octet and/or bit locations) and/or order of these in an IE and/or Request Type field may be altered and/or re-ordered from those illustrated herein. In some configurations, fields/subfields/octets/bits are established/configured/modified/added/appended and/or repurposed. As shown in 902, reserved bit-15 of the Request Type Field may be repurposed to indicate rTWT. Additionally or alternatively, a bit may be appended to the Request Type field in the Broadcast TWT Parameter Set field. The AP may also communicate the rTWT SP Announcement element 500 (or other fields/bits indicated by the rTWT SP Announcement element 500) in broadcast management frames containing a broadcast TWT element that may include one or more rTWT parameter set fields (not shown). The AP may also communicate the rTWT SP Announcement element 500 (or other fields/bits indicated by the rTWT SP Announcement element 500) in individual probe response frames addressed to STAs (e.g., dedicated frames for setup procedures). Moreover, the AP may communicate the rTWT SP Announcement element 500 (or other fields/bits indicated by the rTWT SP Announcement element 500) in any other frames that carry TWT elements.

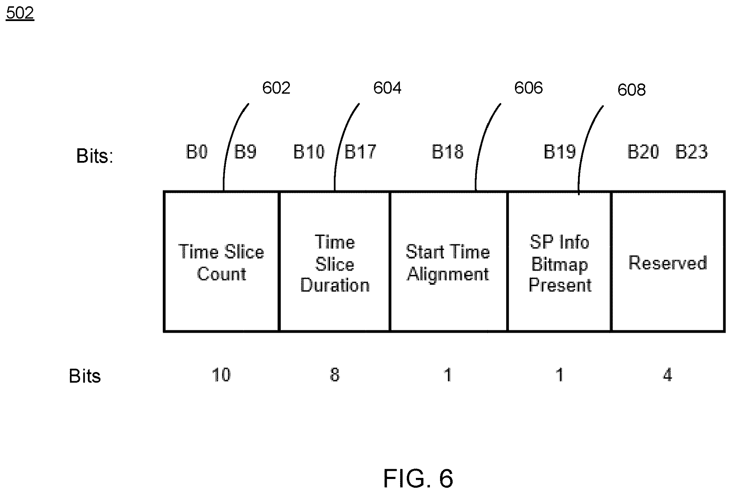

The SP Bitmap Control field 502 may indicate SP information in the time domain. In some configurations, the SP Bitmap Control field 502 may be 3 octets long (or other number of bits or octets, e.g., 8 or 14 bits long). FIG. 6 shows an example SP Bitmap Control format 502, according to an example implementation of the present disclosure. It is contemplated that the locations (e.g., field, subfield, bitmap, octet and/or bit locations) and/or order of these in an IE and/or SP Bitmap Control format 502 may be altered and/or re-ordered from those illustrated herein. In some configurations, fields/subfields/octets/bits are established/configured/modified/added/appended and/or repurposed.

Referring to FIG. 6, the Time Slice Count field 602 may specify the number of time slices/slots that may be included in the rTWT SP Announcement Element 500. The Time Slice Count field 602 may indicate the total number of time slices constituting/forming/in the timeline. The Time Slice Count field 602 may be 10 bits long (or other number of bits or octets, e.g., 8 or 14 bits long).

The Time Slice Duration field 604 may specify the time duration of each time slice. By determining the duration of each time slice using Time Slice Duration field 604, and by parsing the Time Slice Count field 602, a STA receiving the rTWT Announcement element 500 (or receiving other indications/fields/bits of the timeline of configured SPs) may reconstruct the timeline of configured SPs. In some configurations, each time slice may be in units of 256 microseconds, or a multiple thereof. In some configurations, the Time Slice Duration field 604 may be 8 bits long (or other number of bits or octets, e.g., 8 or 14 bits long). In some configurations, the maximum duration of a time slice may be 64 time units (TUs). A certain number of time slices may form an SP.

Referring to FIGs. 5 and 6, the First Slice Start Time field 504 indicates the start time of the first time slice. In some embodiments, a device parsing the rTWT Announcement element 500 may determine the start time of the first time slice constituting the timeline expressed by the rTWT Announcement element using both the First Slice Start Time field 504 in FIG. 5 and the Start Time Alignment field 606 in FIG. 6. The Start Time Alignment field 606 may indicate whether the start time of the first time slice is a relative time used to align a time of the device communicating the rTWT Announcement element (e.g., an AP) and a time of a device receiving the rTWT Announcement element (e.g., an AP).

The relative time may be an offset based on a current target beacon transmission time (TBTT) time synchronization function (TSF) time. In an example, if the Start Time Alignment field 606 is set to a defined value (e.g., set to 1 (or 0)), then the First Slice Start Time 504 may specify the start time offset of the first time slice with respect to the current TBTT TSF. If the Start Time Alignment field 606 is set to a defined value (e.g., set to 0 (or 1)), then a portion of bits of the current TSF (e.g., a lower portion such as the 4 LSBs, or the entire TSF) may be used in conjunction with the value indicated in the First Slice Start Time field 504 to calculate the start time of the first time slice, with some predefined function or operation. For example, the First Slice Start Time 504 may specify at least a portion of bits (e.g., the lower 32 bits) of the start time of the first slice with respect to the current TSF. An upper/remaining portion of bits (e.g., 32 bits) of the start time may be obtained (e.g., by a STA receiving the announcement element) from the (e.g., the STA's) current TSF (e.g., TSF's 32 MSB). In other embodiments, the absolute time (as opposed to the TSF time) may be indicated using at least a portion of bits in the First Slice Start Time field 504. Additionally or alternatively, the current TSF of the device communicating the rTWT Announcement element 500 (e.g., the AP) TSF value may be indicated using at least a portion of bits in the First Slice Start Time field 504. In these embodiments, the First Slice Start Time field 504 may 2 octets, 4 octets, 8 octets, and the like. Accordingly, the Start Time Alignment field 606 may be a reserved bit (or unused/ignored/omitted) because the times (e.g., specific/absolute times) are already being indicated in the First Slice Start time field 504.

The SP Info Bitmap Present field 608 may indicate whether the SP Info Bitmap field (e.g., 510 in FIG. 5) is present. For example, if the SP Info Bitmap Present field 608 is a defined value (e.g., set to 1 (or 0)), the SP Info Bitmap field (e.g., 510 in FIG. 5) may be present (e.g., contain valid/meaningful information). If the SP Info Bitmap Present field 608 is set to the defined value, then the SP Info Bitmap field 510 may contain valid information regarding time slice(s) occupied by a rTWT SP (that may have at least one rTWT membership that is active) as described below. If the SP Info Bitmap Present subfield 608 is not set to the defined value (e.g., set to 0 (or 1)), the SP Info Bitmap Present field (e.g., 510 in FIG. 5) may not be present. If the SP Info Bitmap Present field 608 is not set to the defined value, then the SP Info Bitmap field 510 may not be valid. That is, the SP Info Bitmap field 510 may contain padding or other non-useful information, or the field may not be present. Accordingly, if the SP Info Bitmap field 510 is not valid, then the fields in the SP Info Bitmap may be ignored/bypassed/skipped (e.g., by the STA receiving the rTWT Announcement element).

The Persistence field 506 may indicate a persistence of the configured SPs in the timeline. Specifically, the Persistence field 506 may specify a number of TBTTs during which the rTWT SP(s) corresponding to the restricted SP announcement may persist or be present. In other embodiments, the Persistence field 506 may specify the validity of the configured SP schedule in microseconds, milliseconds, time units, etc. A number of beacon intervals during which the rTWT SP(s) are present may be based on the Persistence field 506. For example, the number of beacon intervals during which rTWT SPs are present may be equal to the value in the Persistence field 506 plus a value (e.g., one). In some configurations, a bit value in the Persistence field 506 may indicate that rTWT SPs are present until explicitly terminated or changed. For example, a defined value (such as 255) in the Persistence field 506 may indicate that rTWTs are present until explicitly terminated. In some configurations, the Persistence field 506 may be 1 octet long (or other number of bits or octets, e.g., 8 or 14 bits long).

The SP Status Bitmap 508 may contain a bitmap (e.g., a plurality of bits) configured to indicate a status of each time slice in the timeline. Generally, the SP Status Bitmap 508 may indicate whether a particular SP is occupied. For example, the SP Status Bitmap 508 may indicate time slices occupied by a rTWT SP. In some embodiments, time slices identified as being occupied by a rTWT SP may have at least one rTWT membership that may be active (e.g., the rTWT SP may have at least one rTWT member STA). In this case, one or more devices may have already negotiated with the AP to establish membership in the SP, and the AP may have admitted the one or more other devices to the SP schedule. In other embodiments, time slices may be occupied by a rTWT SP but may not have at least one rTWT membership (e.g., the rTWT SP may not have at least one rTWT member STA). In this case, one or more devices may not have already negotiated with the AP to establish membership in the SP. That is, the AP may advertise/announce the capacity/availability of the rTWT SPs in the schedule (e.g., for additional membership).

The SP Status Bitmap 508 may indicate the status (or capacity/availability) of each time slice by setting bits corresponding to a time slice. For example, a bit in position i set to a defined value (e.g., set to 1 (or 0)) may indicate that the corresponding *ith* time slice may be occupied by a rTWT SP (and/or the rTWT SP may have at least one rTWT member STA). If a bit is not set to the defined value (or otherwise indicated/identified/selected/specified) in the SP Status Bitmap 508, then the time slice corresponding to the bit may not be occupied by a rTWT SP and/or the rTWT SP may not have at least one rTWT membership that is active.

The SP Status Bitmap 508 may be of variable length. For example, the length of the SP Status Bitmap field 508 may be a number of octets calculated by ceil (N/8), where N is the value of the Time Slice Count field (e.g., Time Slice Count 602 in FIG. 6). In some configurations, the first N bits may correspond to the time slices described by the rTWT SP Announcement element 500. In some configurations, the remaining N bits (if any), may be padding bits set to 0 (or 1). In some configurations, a single bit (e.g., bit 0 of the first octet) may represent the first time slice. For example, bit 0 of the first octet of the SP Status Bitmap 608 may represent the first time slice.

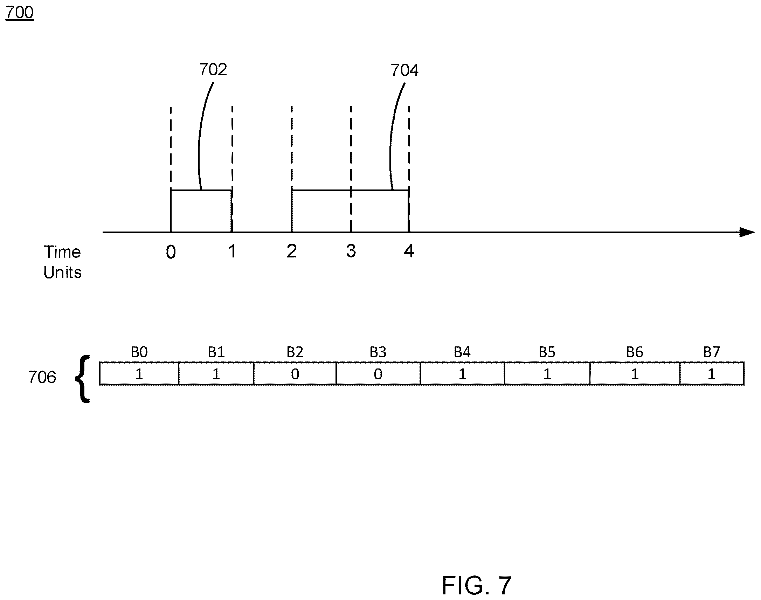

FIG. 7 illustrates an example 700 of the SP Status Bitmap field 508 of FIG. 5 indicating whether a time slice is occupied by a rTWT SP, according to an example implementation of the present disclosure. In the example 700, for time 0-1 TU, SP 702 with one or more member STAs may be configured. As shown, SP 702 may have a 1 TU duration. During a time 1-2 TU, there may not be any SP configured (e.g., empty time). During a time 2-3 TU, SP 704 with one or more member STAs may be configured. As shown, SP2 704 may have a 2 TU duration. According to an indicator (e.g., the Time Slice Duration field 604 in FIG. 6), the time slice duration may be 2 (e.g., 2 x 256 microseconds = 512 microseconds). Accordingly, the SP Status Bitmap field 608 may express bitmap 706, which, from the least significant bit, is 1 1 0 0 1 1 1 1. As shown by bitmap 706, the value of each bit describes the occupancy of the time slice. In the example 700, if the time slice is occupied by a SP with at least 1 member, then there is a rTWT agreement setup and the bit is set to 1.

Referring back to FIG. 5, the SP Info Bitmap 510 may be optionally present in the rTWT Announcement element 500. If the SP Info Bitmap 510 is not present, then the bits associated with the SP Info Bitmap 510 may not be valid (e.g., padding bits, non-useful bits, reserved bits, etc.) or may not be present. If the SP Info Bitmap 510 is present, then the SP Info Bitmap 510 may contain additional information about the time slices, and the SPs they represent, in the timeline. The SP Info Bitmap 510 may contain repetitions of SP Slice Information fields. The SP Slice Information field may comprise M bits. In some embodiments, the SP Info Bitmap 510 may contain N repetitions of SP Slice Information field, where N may be the value in the Time Slice Count field (e.g., Time Slice Count field 602 in FIG. 6). The length of the SP Info Bitmap 510 may be variable. In some configurations, the length of the field (e.g., in octets) may be calculated by ceil (M*N/8). In some configurations, a portion of the bits may correspond to time slices described by the rTWT SP Announcement element 500. For example, the first M*N bits in the field may correspond to time slices described by the rTWT SP Announcement element 500. In some configurations, remaining bits (if any) may be padding bits and may be set to a defined value (e.g., set to 0 (or 1)). In some configurations, a portion of the bits (e.g., bits 0-3 of the first octet) may describe the first time slice's information.

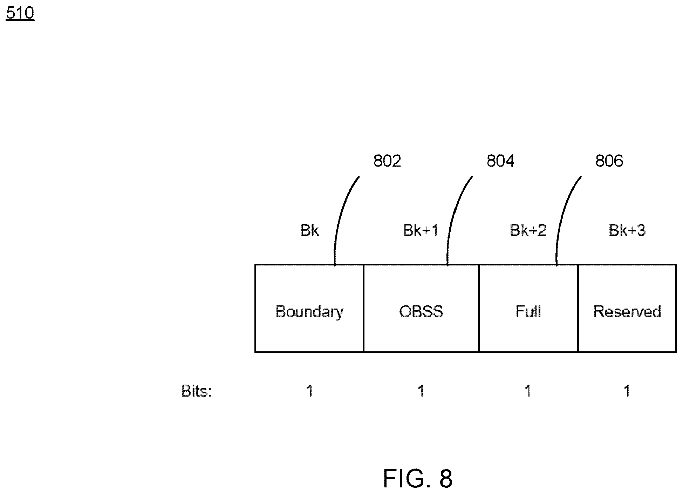

FIG. 8 shows an example SP Slice Information field format 510, according to an example implementation of the present disclosure. In this case, M=4. It is contemplated that the locations (e.g., field, subfield, bitmap, octet and/or bit locations) and/or order of these in an information element (IE) and/or SP Slice Information field 510 be altered and/or re-ordered from those illustrated herein. In some configurations, bit *k* to bit *k+(M-1)* may describe the information for time slice k/M.

In some embodiments, the Boundary field 802 may indicate the start of an SP (or an end of a SP) with respect to a particular time slice. Each SP, comprising one or more time slices, may have a start boundary and an end boundary. The first time slice (and/or the last time slice) may be identified using the Boundary field 802. If the Boundary field 802 is set to a defined value, then a particular time slice of a SP may be beginning and the device receiving the rTWT Announcement element 500 may end their TXOP before this start boundary.

The overlapping basic service set (OBSS) field 804 may indicate whether the corresponding rTWT SP, represented by the SP Slice Information field, is setup by a device in a neighboring basic service set (BSS). The neighboring BSS may be a BSS different from (e.g., adjacent or next to) the BSS of the device communicating the rTWT SP Announcement element 500 and/or the device receiving the rTWT SP Announcement element 500. The OBSS subfield 804 may be used for coordinating different BSS rTWT schedules. In some embodiments, APs (or other devices) may share rTWT schedules across multiple BSS to help manage interference between BSSs. The AP may advertise whether the advertised schedule is from the AP's own BSS (e.g., the STA's/AP/s own BSS) or an OBSS. In some cases, the AP may identify the OBSS associated with the advertised schedule.

The Full field 806 may indicate a capacity (or resource capacity/availability status) of an rTWT SP indicated by the corresponding SP Slice Information field. In some embodiments, the Full field 806 may be set to a defined value (e.g., set to 1 (or 0)) if the rTWT scheduling AP is unlikely to accept new memberships in a particular SP (e.g., when membership in the particular SP has reached full capacity). In particular, the rTWT scheduling AP may be unlikely to accept STAs to setup a new or revised rTWT schedule with any SP overlapping with a particular time slice. In an example, the scheduling AP may have already received scheduling requests and allocated a threshold/maximum amount of resources for the particular SP (and/or each of the time slices of the SP). That is, the rTWT scheduling AP may be unlikely to be available for a new membership request. In other embodiments, the Full field 806 may be set to a defined value if the rTWT scheduling AP is unlikely to increase one or more parameters of the SP (e.g., the schedule duration, or the nominal minimum TWT wake duration).

The Full field 806 may be used to indicate to a receiving device whether to target/not target a SP (and its corresponding time slices) for establishing membership. For example, if the Full field 806 is set, then devices receiving the rTWT Announcement element 500 may determine not to target the SP (to request the AP) for membership. If the Full field 806 is not set, then devices receiving the rTWT Announcement element 500 may determine to target the SP (to request the AP) for membership.

In some configurations, the SP Status Bitmap field and the SP Info Bitmap field may be merged into one bitmap. In this case, the SP Info Bitmap Present subfield may be a reserved bit because the SP Info Bitmap field, if merged with the SP Status bitmap field, may always be present. In other configurations, other bitmaps/bits/fields/subfields may be merged in the rTWT Announcement element 500 (or other IE).

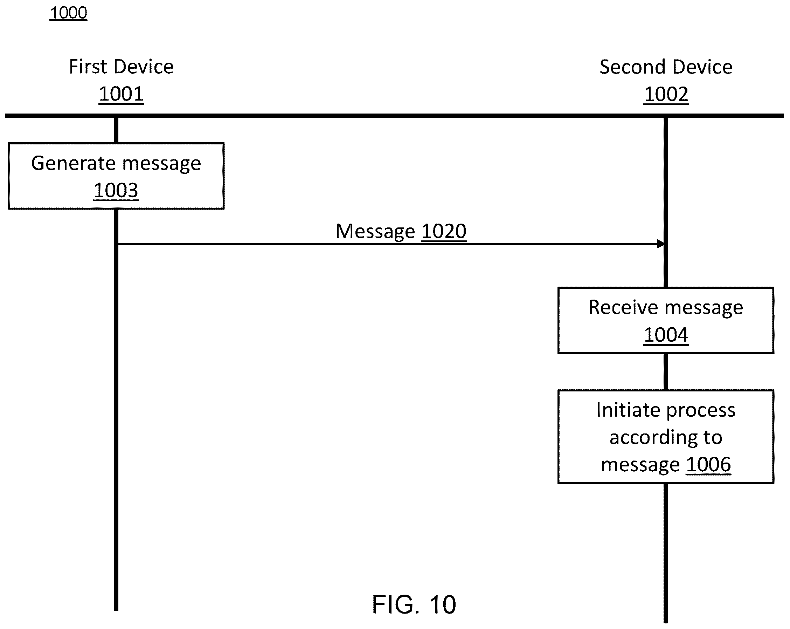

FIG. 10 illustrates an interaction/flow diagram showing a process 1000 of announcing a rTWT SP schedule, according to an example implementation of the present disclosure. In some embodiments, the process 1000 is performed by a first device 1001 and a second device 1002. The first device 1001 and the second device 1002 may be some combination of an AP (e.g., AP 105), a soft AP, and/or a station (e.g., computing device 110). In some embodiments, the process 1000 is performed by other entities. In some embodiments, the process 1000 includes more, fewer, or different steps than shown in FIG. 10.

In more details of operation 1003, the first device 1001 may configure at least one indicator (e.g., rTWT SP Announcement element 500 in FIG. 5, or at least one field/subfield) indicating a status of each of a plurality of configured SPs in a timeline (e.g., SP Status Bitmap 508 in FIG. 5). The timeline may convey/represent an occurrence of SPs on the channel/link/medium availability by expressing information about each time slice. The status can indicate whether a time slice of a first SP of the configured SPs is occupied by a rTWT schedule. The status (or other indicator configured using bits/fields/subfields in other fields/subfields) may indicate whether the configured SP is occupied by (or assigned to) a third device (e.g., a member device) and/or whether the SP has any member devices. For example, the status may indicate whether the configured SP has at least one rTWT membership that is setup/active.

An indicator of the at least one indicator (e.g., SP Bitmap Control 502 in FIG. 5) may include a field to indicate a total number of time slices constituting the timeline (e.g., Time Slice Count field 602 in FIG. 6). The time slices may be associated with zero SPs and/or multiple time slices may be associated with a single SP. The indicator (e.g., SP Bitmap Control 502 in FIG. 5) may also include a field to indicate a duration of each time slice in the timeline (e.g., Time Slice Duration 604 in FIG. 6).

An indicator of the at least one indicator (e.g., rTWT SP Announcement element 500 in FIG. 5) may include a field to indicate a start time of a first time slice of the plurality of time slices constituting the timeline. The start time of the first time slice may be a relative time used to align a time of the first device 1001 and a time of the second device 1002. The start time of the first time slice may align the first device 1001 and the second device 1002 using an offset based on TBTT TSF. That is, the start time of the first time slice may be a relative time based on the offset. For example, the Start Time Alignment field 606 in FIG. 6 in the SP Bitmap Control 502 in FIG. 5 may be set such that the First Slice Start Time 504 in the rTWT SP Announcement element 500 in FIG. 5 specifies the start time offset of the first time slice with respect to the current TBTT. Additionally or alternatively, the start time of the first time slice may indicate a TSF. For example, the Start Time Alignment field 606 in FIG. 6 in the SP Bitmap Control 502 in FIG. 5 may be set such that the First Slice Start Time 504 in Fig. 5 in the rTWT SP Announcement element 500 in FIG. 5 specifies a portion of bits of the current TSF (or the entire TSF).

An indicator of the at least one indicator (e.g., SP Bitmap Control 502 in FIG. 5) may include a field to indicate whether another field is present or has valid information. For example, the SP Info Bitmap Present field 608 in FIG. 6 of the SP Bitmap Control field 502 in FIG. 5 may indicate whether the SP Info Bitmap 510 in FIG. 5 contains valid information. If the SP Info Bitmap 510 in FIG. 5 is present (e.g., the SP Info Bitmap Present field 608 is set to a defined value such as 1), then the SP Info Bitmap 510 may indicate time slices occupied by a rTWT SP, where the rTWT SP may have at least one rTWT member STA. If the SP Info Bitmap 510 is not present/valid (e.g., the SP Info Bitmap Present field 608 is set to a defined value such as 0), then the SP Info Bitmap 510 may indicate non-useful information such as padding.

An indicator of the at least one indicator (e.g., rTWT SP Announcement element 500 in FIG. 5) may also include a field to indicate a persistence of the configured SPs. For example, the Persistence field 506 may specify a number of TBTTs (or a time duration in microseconds/milliseconds) during which the rTWT SP(s) corresponding to the restricted SP announcement may be present or repeated.

An indicator of the at least one indicator (e.g., SP Info Bitmap 510) may include a field to indicate whether a time slice indicates a start of a particular SP of the plurality of configured SPs. For example, the Boundary field 802 in FIG. 8 may indicate the start of an SP such that any devices that are not members of the SP may end their transmission.

An indicator of the at least one indicator (e.g., SP Info Bitmap 510) may also include a field to indicate whether a particular SP of the configured SPs is configured by a third device (not shown) in a neighboring BSS different from (e.g., next/neighboring/proximate to) the BSS of the first device 1001 and the second device 1002. For example, the OBSS field 804 in FIG. 8 may be used to coordinate different BSS rTWT schedules to manage interference between BSS.

An indicator of the at least one indicator (e.g., SP Info Bitmap 510) may also include a field to indicate whether a particular SP of the configured SPs is associated with a threshold amount of allocated resources or is unlikely to be available for a new membership request. For example, the Full field 806 in FIG. 8 may indicate whether a scheduling AP (e.g., first device 1001) is unlikely to accept new membership in a particular SP (or that the SP has reached maximum capacity of membership or device occupancy/assignment). For example, the scheduling AP may have allocated a threshold amount of resources for the particular SP.

In more details of operation 1020, the first device 1001 may transmit the message to the second device 1002. For example, the first device 1001 may transmit the message as an announcement.

In more details of operation 1004, the second device 1002 may receive the message transmitted by the first device 1001. The second device 1002 may extract/determine/obtain information from the message. The second device 1002 receiving the message may determine an occurrence of SPs on the channel/link/medium based on the bits/fields/subfields indicated in the message. In an example, the first device 1001 may communicate a rTWT SP Announcement element 500 to express, using a timeline, one or more configured SPs. As discussed herein, the configured SPs may be used for rTWT scheduling. The second device 1002 may construct/determine the timeline of configured SPs by extracting SP information from indicators/bits/fields in the message. For example, using the duration of each time slice of the timeline (e.g., Time Slice Duration field 604 in FIG. 6) and the total number of time slices in the timeline (e.g., Time Slice Count field 602 in FIG. 6), the second device 1002 receiving the message (e.g., the rTWT Announcement element 500 (or receiving other indications/fields/bits of the timeline of configured SPs)) may reconstruct the timeline of configured SPs. The second device 1002 may reconstruct/determine the scheduled SPs in the timeline using the status of each time slice of the timeline (e.g., SP Status Bitmap 508 in FIG. 5) and information about each time slice (e.g., SP Info Bitmap 510 in FIG. 5).

In more details of operation 1006, the second deice 1002 may initiate an operation according to the message received in operation 1020. In particular, the second device 1002 may determine an operation with respect to the start of the SP and/or during the SP. For example, using the reconstructed timeline of configured restricted SP schedules (and other information in the message), the second device 1002 may determine to negotiate membership of one or more SPs of the configured SPs. Accordingly, the second device 1002 may determine to communicate/send a membership request for a SP based on the status of the configured SPs received in the message. For example, the second device 1002 may request to transmit latency sensitive traffic in one or more configured SPs if the Full field 806 in FIG. 8 in the SP Info Bitmap 510 in FIG. 5 indicates that the AP may accept new membership for the particular SPs and/or the SP Status Bitmap 508 in FIG. 5 indicates that one or more time slices of the SP are configured for rTWT. In this case, the second device 1002 may initiate a negotiation process indicating the requested SP, traffic identifiers (TIDs) identifying latency sensitive traffic streams, QoS characteristics, etc.

Additionally or alternatively, the second device 1002 may determine, using the SP Status Bitmap 508 in FIG. 5, that the status of the SP indicates that the SP may be active (e.g., there may be at least one rTWT membership with one member device in the SP, the SP is occupied). In this case, the second device 1002 may determine that their operation is to stop/end/terminate transmission of traffic (if any) before the start time of the configured SP (e.g., determine to avoid the SP, determine to end any on-going transmission at the start of the SP).

Having now described some illustrative implementations, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements and features discussed in connection with one implementation are not intended to be excluded from a similar role in other implementations or implementations.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device, etc.) may include one or more devices (e.g., RAM, ROM, Flash memory, hard disk storage, etc.) for storing data and/or computer code for completing or facilitating the various processes, layers and modules described in the present disclosure. The memory may be or include volatile memory or non-volatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit and/or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the aspects and implementations disclosed herein.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Systems and methods described herein may be embodied in other specific forms without departing from the characteristics thereof. References to "approximately," "about" "substantially" or other terms of degree include variations of +/-10% from the given measurement, unit, or range unless explicitly indicated otherwise. Coupled elements can be electrically, mechanically, or physically coupled with one another directly or with intervening elements. Scope of the systems and methods described herein is thus indicated by the appended claims, rather than the foregoing description, and changes that come within the meaning and range of equivalency of the claims are embraced therein.

The term "coupled" and variations thereof includes the joining of two members directly or indirectly to one another. Such joining may be stationary (e.g., permanent or fixed) or moveable (e.g., removable or releasable). Such joining may be achieved with the two members coupled directly with or to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References to "or" can be construed as inclusive so that any terms described using "or" can indicate any of a single, more than one, and all of the described terms. A reference to "at least one of 'A' and 'B'" can include only 'A', only 'B', as well as both 'A' and 'B'. Such references used in conjunction with "comprising" or other open terminology can include additional items.

Modifications of described elements and acts such as variations in sizes, dimensions, structures, shapes and proportions of the various elements, values of parameters, mounting arrangements, use of materials, colors, orientations can occur without materially departing from the teachings and advantages of the subject matter disclosed herein. For example, elements shown as integrally formed can be constructed of multiple parts or elements, the position of elements can be reversed or otherwise varied, and the nature or number of discrete elements or positions can be altered or varied. Other substitutions, modifications, changes and omissions can also be made in the design, operating conditions and arrangement of the disclosed elements and operations without departing from the scope of the present disclosure.

References herein to the positions of elements (e.g., "top," "bottom," "above," "below") are merely used to describe the orientation of various elements in the FIGURES. The orientation of various elements may differ according to other exemplary embodiments, and that such variations are intended to be encompassed by the present disclosure.

The invention may be further understood with reference to the following clauses:
Clause 1. A method comprising:
   configuring, by a first wireless communication device, at least one indicator indicating a status of each of a plurality of configured service periods (SPs) in a timeline, the plurality of configured SPs for restricted target wake time (rTWT) scheduling; and
   sending, by the first wireless communication device to a second wireless communication device, a message including the at least one indicator.
Clause 2. The method of clause 1, wherein the at least one indicator is for use by at least one of the first wireless communication device or the second wireless communication device to negotiate membership of a SP of the plurality of configured SPs, or to determine an operation with respect to the SP.
Clause 3. The method of clause 1, wherein the at least one indicator includes a field to indicate a total number of time slices, the total number of time slices comprising the timeline indicating an occurrence of a SP of the plurality of configured SPs.
Clause 4. The method of clause 1, wherein the at least one indicator includes a field to indicate a duration of each time slice in the timeline.
Clause 5. The method of clause 1, wherein the at least one indicator includes a field to indicate a start time of a first time slice of a plurality of time slices.
Clause 6. The method of clause 5, wherein the at least one indicator includes another field to indicate whether the start time of the first time slice is a relative time used to indicate an alignment of the start time of the first time slice of the plurality of time slices with respect to a time synchronization function (TSF), the alignment based on an offset of a target beacon transmission time (TBTT) TSF; and/or
   wherein the start time of the first time slice indicates a time synchronization function (TSF).
Clause 7. The method of clause 1, wherein the at least one indicator includes a field to indicate whether another field is present or has valid information; and/or
   wherein the at least one indicator includes a field to indicate a persistence of the configured SPs.
Clause 8. The method of clause 1, wherein the status indicates whether a time slice of a first SP of the configured SPs is occupied by a rTWT schedule;
   wherein the status indicates whether the first SP of the configured SPs is occupied by a member wireless communication device; and
   wherein the time slice of the first SP of the configured SPs being occupied by the member wireless communication device causes the second wireless communication device to perform an operation at a start time of the first SP of the configured SPs.
Clause 9. The method of clause 1, wherein the at least one indicator includes a field to indicate whether a time slice indicates a start of a particular SP of the plurality of configured SPs.
Clause 10. The method of clause 1, wherein the at least one indicator includes a field to indicate whether a particular SP of the configured SPs is configured by a third wireless communication device in a basic service set different from that of the second wireless communication device.
Clause 11. The method of clause 1, wherein the at least one indicator includes a field to indicate whether a particular SP of the configured SPs is associated with a threshold amount of allocated resources or is unlikely to be available for a new membership request.
Clause 12. A method comprising:
   receiving, by a second wireless communication device from a first wireless communication device, a message including at least one indicator,
   wherein the at least one indicator indicates a status of each of a plurality of configured service periods (SPs) in a timeline, for restricted target wake time (rTWT) scheduling. Clause 13. The method of clause 12, wherein the at least one indicator is for use by at least one of the first wireless communication device or the second wireless communication device to negotiate membership of a SP of the plurality of configured SPs, or to determine an operation with respect to the SP.
Clause 14. The method of clause 12, further comprising:
   sending, by the second wireless communication device to the first wireless communication device, a membership request for a SP based on the status of the configured SPs; and/or
   ending transmission of traffic of the second wireless communication device before a start time of a particular SP responsive to the status of the particular SP being occupied by a member wireless communication device of a rTWT schedule.
Clause 15. A first wireless communication device comprising:
   at least one processor configured to configure at least one indicator indicating a status of each of a plurality of configured service periods (SPs) in a timeline, for restricted target wake time (rTWT) scheduling; and
   a transmitter configured to send a message including the at least one indicator to a second wireless communication device.

A number of implementations have been described. Nevertheless, it will be understood that various modifications may be made without departing from the scope of the disclosure. Accordingly, other implementations are within the scope of the following claims.

## Claims

1. A method comprising:
configuring, by a first wireless communication device, at least one indicator indicating a status of each of a plurality of configured service periods (SPs) in a timeline, the plurality of configured SPs for restricted target wake time (rTWT) scheduling; and
sending, by the first wireless communication device to a second wireless communication device, a message including the at least one indicator;
wherein the at least one indicator includes a field to indicate a start time of a first time slice of a plurality of time slices; and
wherein the at least one indicator includes another field to indicate whether the start time of the first time slice is a relative time used to indicate an alignment of the start time of the first time slice of the plurality of time slices with respect to a time synchronization function (TSF), the alignment based on an offset of a target beacon transmission time (TBTT) TSF.

2. The method of claim 1, wherein the at least one indicator is for use by at least one of the first wireless communication device or the second wireless communication device to negotiate membership of a SP of the plurality of configured SPs, or to determine an operation with respect to the SP.

3. The method of claim 1, wherein the at least one indicator includes a field to indicate a total number of time slices, the total number of time slices comprising the timeline indicating an occurrence of a SP of the plurality of configured SPs.

4. The method of claim 1, wherein the at least one indicator includes a field to indicate a duration of each time slice in the timeline.

5. The method of claim 1, wherein the start time of the first time slice indicates a time synchronization function (TSF).

6. The method of claim 1, wherein the at least one indicator includes a field to indicate whether a time slice indicates a start of a particular SP of the plurality of configured SPs.

7. The method of claim 1, wherein the at least one indicator includes a field to indicate whether a particular SP of the configured SPs is configured by a third wireless communication device in a basic service set different from that of the second wireless communication device.

8. The method of claim 1, wherein the at least one indicator includes a field to indicate whether a particular SP of the configured SPs is associated with a threshold amount of allocated resources.

9. A method comprising:
receiving, by a second wireless communication device from a first wireless communication device, a message including at least one indicator,
wherein the at least one indicator indicates a status of each of a plurality of configured service periods (SPs) in a timeline, for restricted target wake time (rTWT) scheduling;
wherein the at least one indicator includes a field to indicate a start time of a first time slice of a plurality of time slices; and
wherein the at least one indicator includes another field to indicate whether the start time of the first time slice is a relative time used to indicate an alignment of the start time of the first time slice of the plurality of time slices with respect to a time synchronization function (TSF), the alignment based on an offset of a target beacon transmission time (TBTT) TSF.

10. The method of claim 9, wherein the at least one indicator is for use by at least one of the first wireless communication device or the second wireless communication device to negotiate membership of a SP of the plurality of configured SPs, or to determine an operation with respect to the SP.

11. The method of claim 9, further comprising:
sending, by the second wireless communication device to the first wireless communication device, a membership request for a SP based on the status of the configured SPs; and/or
ending transmission of traffic of the second wireless communication device before a start time of a particular SP responsive to the status of the particular SP being occupied by a member wireless communication device of a rTWT schedule.

12. A first wireless communication device comprising:
at least one processor configured to configure at least one indicator indicating a status of each of a plurality of configured service periods (SPs) in a timeline, for restricted target wake time (rTWT) scheduling; and
a transmitter configured to send a message including the at least one indicator to a second wireless communication device;
wherein the at least one indicator includes a field to indicate a start time of a first time slice of a plurality of time slices; and
wherein the at least one indicator includes another field to indicate whether the start time of the first time slice is a relative time used to indicate an alignment of the start time of the first time slice of the plurality of time slices with respect to a time synchronization function (TSF), the alignment based on an offset of a target beacon transmission time (TBTT) TSF.
